# EUROPÄISCHE PATENTSCHRIFT

(11) **EP 4 252 081 B1**
(45) Veröffentlichungstag und Bekanntmachung des Hinweises auf die Patenterteilung: **07.05.2025**
(21) Anmeldenummer: 21819845.5
(22) Anmeldetag: 26.11.2021
(51) Int. Cl.: G04G 9/00

(54) **ANZEIGEVORRICHTUNG SOWIE VERFAHREN ZUR ANZEIGE EINES ZEITLICHEN ABLAUFS VON ZUMINDEST ZWEI AUFEINANDERFOLGENDEN EREIGNISSEN UND/ODER AUSZUFÜHRENDEN TÄTIGKEITEN**
DISPLAY DEVICE AND METHOD FOR DISPLAYING A TIMELINE OF AT LEAST TWO CONSECUTIVE EVENTS AND/OR ACTIONS TO BE PERFORMED
DISPOSITIF D'AFFICHAGE ET PROCEDE D'AFFICHAGE D'UNE CHRONOLOGIE D'AU MOINS DEUX EVENEMENTS ET/OU ACTIONS CONSECUTIFS A REALISER

(30) Priorität: 30.11.2020 DE 102020131601
(43) Veröffentlichungstag der Anmeldung: 04.10.2023
(73) Patentinhaber: neuroTime GmbH, 47119 Duisburg (DE)
(72) Erfinder: Nikodemus, Manuel, 52066 Aachen (DE); Müller-Remus, Dirk, 10963 Berlin (DE); Schepers, Jan, 47249 Duisburg (DE); Strieffler, Christian, 55595 Sommerloch (DE)
(74) Vertreter: Zeiner, Johannes Michael
(86) Internationale Anmeldenummer: PCT/EP2021/083122
(87) Internationale Veröffentlichungsnummer: WO 2022/112485

(56) Entgegenhaltungen:
- US-A1- 2011 193 878
- US-A1- 2017 212 478

## Beschreibung

Die Erfindung betrifft eine Vorrichtung zur Anzeige eines zeitlichen Ablaufs von zumindest zwei aufeinanderfolgenden Ereignissen und/oder auszuführenden Tätigkeiten, die einen Grundkörper mit mindestens zwei Anzeigefeldern sowie ein bewegbares Anzeigemittel aufweist, wobei das bewegbare Anzeigemittel dazu eingerichtet ist, auf eines der Anzeigefelder zu zeigen, um auf das Ereignis und/oder die auszuführende Tätigkeit hinzuweisen.

DE 94 18 186.1 beschreibt eine mechanische Kinderuhr mit einem einzigen als Stundenzeiger ausgebildeten Anzeigemittel sowie einer Ringdrehscheibe, auf die Piktogramme aufgebracht sind. Durch Drehung der Ringscheibe kann beispielsweise ein ein TV-Gerät zeigendes Piktogramm auf eine bestimmte Uhrzeit gedreht werden, zu der ein die Uhr benutzendes Kind Fernsehen darf. Zeigt der Stundenzeiger dann auf dieses Piktogramm, weiß das Kind, dass die kommende Aktivität Fernsehen ist. Mit dieser Kinderuhr ist keine Dauer eines Ereignisses plan- oder anzeigbar, lediglich dessen Beginn.

Aus US 2015/0313388 A1 ist eine mechanische Kinderuhr bekannt, die zwei in ihrer Größe anpassbare Anzeigefelder 3, 5 aufweist, von denen ein erstes 5 für eine Tagzeit und ein weiteres 3 für eine Nachtzeit steht. Auf das für eine Tagzeit stehende Anzeigefeld 5 können Pikotgramme 6, 7 aufgebracht werden, die für den Beginn von Aktivitäten zu bestimmten Tagzeiten stehen und auf die ein Zeiger 20 zeigen kann. Eine Umdrehung des Zeigers 20 (= 360 Grad) entspricht 24h.

DE 94 13 324.7 beschreibt eine mechanische Kinderuhr 1, die als Wand- oder Standuhr ausgebildet ist, und die einen verstellbaren Ring 7 aufweist, an dem Markierungselemente 4, 4" lösbar anbringbar sind. Zur Erfassung von Zeitspannen für Aktivitäten werden zwei Markierungselemente 4 mit Piktogrammen angebracht, wobei ein erstes für einen Beginn und ein zweites für ein Ende der Zeitspanne steht.

US 2011/0193878 offenbart ein Mobiltelefon, auf dessen LCD-Anzeigebildschirm eine Uhr 310 mit Anzeigefeldern 330 angezeigt werden kann, wobei jedes Anzeigefeld 330 für eine Aktivität sowie einen dazugehörigen Zeitraum steht. Zeiger sind elektronisch ausgebildet und werden auf der LCD-Bildschirm des Mobiltelefons angezeigt.

Aus DE 195 33 880 C1 ist eine mechanische Kinderuhr bekannt, die einen Rand 2 mit einem Metallring 32 aufweist, an dem Piktogramme 10 befestigbar sind, die auf den Beginn eines bestimmten Ereignisses zu einer bestimmten Uhrzeit hinweisen. Zeiträume, während denen die Aktivität durchgeführt wird, sind aus DE 195 33 880 C1 nicht bekannt, lediglich Zeitpunkte.

DE 20 2014 009 333 U1 offenbart eine mechanische Kinderuhr mit einer visuellen Darstellung von Zeitspannen, während der eine bestimmte Aktivität ansteht.

Aus KR 200168961 Y1 ist eine Zeitplanungsvorrichtung bekannt, die als Standuhr ausgebildet sein kann und die verschiedene Anzeigefelder auf einem Ziffernblatt aufweist, die für verschiedene Zeitträume stehen, in denen bestimmte, durch Piktogramme angedeutete Aktivitäten anstehen.

US 2017/212478 A1 offenbart eine Vorrichtung und ein Verfahren gemäß dem Oberbegriff der Ansprüche 1 und 12.

Aus dem Stand der Technik sind ferner Uhren mit einem Ziffernblatt und mindestens zwei Zeigern bekannt, die eine Uhrzeit in Stunden sowie Minuten anzeigen.

Menschen mit kognitiven Einschränkungen erfassen die Logik zum Ablesen einer Uhrzeit häufig nicht und sind daher auf andere Methoden zur Planung eines zeitlichen Ablaufs, beispielsweise eines Tages- oder Wochenablaufs, angewiesen.

Der Erfindung liegt die Aufgabe zugrunde, eine Vorrichtung der eingangs genannten Art auszubilden, die einem kognitiv beeinträchtigten Menschen eine einfach zu verstehende Zeitplanung ermöglicht. Die Erfindung betrifft eine Vorrichtung zur Anzeige eines zeitlichen Ablaufs von zumindest zwei aufeinanderfolgenden Ereignissen und/oder auszuführenden Tätigkeiten nach Anspruch 1. Bevorzugte Ausführungsformen dieser Vorrichtung sind in den abhängigen Ansprüchen 2-11 definiert. Weitere detaillierte Informationen zu den genannten bevorzugten Ausführungsformen werden nachfolgend beschrieben.

Erfindungsgemäß wird die Aufgabe dadurch gelöst, dass eine Bewegungsgeschwindigkeit des Anzeigemittels einstellbar ist, wobei die Bewegungsgeschwindigkeit des Anzeigemittels von Anzeigefeld zu Anzeigefeld veränderbar ist.

Vorteilhaft können mit einer einzigen Vorrichtung verschieden große Zeiträume geplant werden. Beispielsweise kann die Bewegungsgeschwindigkeit des Anzeigemittels derart eingestellt sein, dass ein vollständiger Tagesablauf zeitlich geplant wird. Denkbar ist, dass die Bewegungsgeschwindigkeit derart eingestellt ist, dass ein Wochen- oder Monatsplan angezeigt wird.

Beispielsweise können besonders wichtige Tätigkeiten oder Ereignisse durch besonders große Anzeigefelder dargestellt werden.

Eine Bewegungsgeschwindigkeit von Anzeigefeld zu Anzeigefeld variiert. Vorteilhaft kann ein lediglich kleines Anzeigefeld für besonders lange Ereignisse und/oder auszuführende Tätigkeiten benutzt werden.

Die Verwendung einer erfindungsgemäßen Vorrichtung zur Produktions-, Urlaubs-, Seminar-, Workshop- oder Ruhestandsplanung ist möglich.

Denkbar ist außerdem die Verwendung einer erfindungsgemäßen Vorrichtung zur Anzeige eines Kochrezeptes sowie den erforderlichen Zubereitungsschritten.

Jedes Anzeigefeld steht für einen bestimmten Zeitraum. Im einfachsten Fall steht ein erstes Anzeigefeld für einen Arbeitstag und ein zweites Anzeigefeld für Freizeit inklusive Nachtruhe. Dazu zeigt das bewegbare Anzeigemittel während der Arbeitszeit in das erste Anzeigefeld und während der Freizeit in das zweite Anzeigefeld. Zur Unterscheidung der benachbarten Anzeigefelder können diese verschiedene Farben oder Formen aufweisen. Denkbar ist, dass die Anzeigefelder mit Bilddarstellungen wie Symbolen oder Piktogrammen versehen sind, die ein Ereignis oder eine auszuführende Tätigkeit visuell darstellen.

Der Grundkörper kann außerdem verschiedene Formen aufweisen, beispielsweise rund, oval, dreieckig, vierckig, hexagonal oder achteckig. Eine andere Anzahl an Ecken ist denkbar.Die Anzeigefelder können gleich groß oder unterschiedlich groß sein.

Vorzugsweise ist der Grundkörper aus einem nachwachsenden Material gebildet, beispielsweise Holz. Denkbar ist, dass der Grundkörper aus einem anderen Material wie Stahl, einem Leichtmetall oder einer Leichtmetalllegierung, Kunststoff oder Glas gebildet ist.

Einem Benutzer, der kognitiv eingeschränkt ist, wird durch die erfindungsgemäße Vorrichtung vorteilhaft unabhängig von einer Uhrzeit im bekannten Sinne eine einfach zu verstehende Zeitplanung bereitgestellt, bei der Zeiträume, in denen bestimmte Aktivitäten anstehen, auf einfache Art und Weise erkennbar sind.

Ferner betrifft die Erfindung ein Verfahren zur Anzeige eines zeitlichen Ablaufs von zumindest zwei aufeinanderfolgenden Ereignissen und/oder auszuführenden Tätigkeiten nach Anspruch 12. Bevorzugte Ausführungsformen des Verfahrens sind in den abhängigen Ansprüchen 13 und 14 definiert. Weitere detaillierte Informationen zu den genannten bevorzugten Ausführungsformen werden nachfolgend beschrieben.

Zweckmäßigerweise wird ein jedes Anzeigefeld einem bestimmten Zeitraum zugeordnet wird, in dem das Ereignis stattfindet und/oder innerhalb dessen eine auszuführende Tätigkeit zu erledigen ist. Vorteilhaft kann ein Benutzer erkennen, welches Ereignis demnächst stattfindet und/oder welche auszuführende Tätigkeit demnächst ansteht. Bildet ein Anzeigefeld beispielsweise ein Viertel der Sichtseite, versteht sich, dass ein Viertel der gesamten Zeit für ein Ereignis oder die Tätigkeit, die für dieses Anzeigefeld steht, aufgewandt werden muss.

In einer Ausgestaltung der Erfindung sind die Anzeigefelder in ihrer Größe veränderbar. Dadurch ist eine Anpassung der Zeiträume, für die die Anzeigefelder stehen, vorteilhaft möglich. Eine Erstellung eines individualisierten Zeitplans, beispielsweise Tagesplans, ist auf einfache Art und Weise möglich.

Dazu können die Anzeigefelder beispielsweise aus farbigen, selbstklebenden Stoff- oder Filzelementen gebildet sein, die auf einen Grundkörper aufgeklebt werden. Bei einer Neuplanung können diese abgelöst und durch neue, die größer oder kleiner sind, ersetzt werden.

In einer weiteren Ausgestaltung der Erfindung ist das Anzeigemittel stabförmig, vorzugsweise als Zeiger, ausgebildet. Ein stabförmiges Anzeigemittel kann beispielsweise in der Art eines umlaufenden Uhrzeigers ausgebildet sein. Vorteilhaft ist ein einfaches Anzeigen eines Ereignisses oder einer auszuführenden Tätigkeit möglich. Eine Zeigerumdrehung um 360 Grad entspricht beispielsweise einem gesamten Zeitraum, in den alle Ereignisse und/oder auszuführenden Tätigkeiten fallen und der zwischen einer Stunde und einem Jahr, insbesondere zwischen 12 Stunden und 1 Woche, betragen kann. Insbesondere beträgt der gesamte Zeitraum einen ganzen Tag, also 24 Stunden, einen Arbeitstag (beispielsweise 8 Stunden) oder eine Nacht (circa 8 Stunden).

In einer Ausgestaltung der Erfindung ist ein Signalmittel vorgesehen, das einen Übergang des Anzeigemittels von einem Anzeigefeld zu einem benachbarten Anzeigefeld signalisiert. Das Signalmittel kann ein akustisches, optisches und/oder haptisches Signal ausgeben, welches darauf hinweist, dass ein anderes Ereignis ansteht und/oder nun eine andere Tätigkeit auszuführen ist. Vorteilhaft muss die Vorrichtung nicht dauerhaft betrachtet werden.

Ein akustisches Signal kann ein Warnton oder ein Tonfolge sein, während ein optisches Signal ein Blinken mindestens eines Warnlämpchens sein kann, und ein haptisches Signal ein Vibrieren des Grundkörpers sein kann.

Zweckmäßigerweise ist bei einem Übergang des Anzeigemittels von einem Anzeigefeld zu einem benachbarten Anzeigefeld eine Trennlinie, die benachbarte Anzeigefelder voneinander abgrenzt, parallel zu dem bewegbaren Anzeigemittel. Vorteilhaft ist ein klare Trennung zwischen benachbarten Anzeigefeldern möglich, Unklarheiten, ob ein Anzeigemittel auf ein erstes oder ein benachbartes zweites Anzeigefeld zeigt, werden vorteilhaft verhindert.

In einer weiteren Ausgestaltung der Erfindung weist der Grundkörper eine Sichtseite mit Sichtseitenabschnitten auf, die von den mindestens zwei Anzeigefeldern gebildet sind. Vorteilhaft sind sämtlichen Anzeigefelder unmittelbar erkennbar. Außerdem kann gesehen werden, welches Ereignis oder welche Tätigkeit demnächst ansteht.

Die Anzeigefelder können beispielsweise als Kreissektoren und/oder Kreissegmente ausgebildet sind. Vorteilhaft wird eine Vorrichtung geschaffen, die in der Art einer Uhr mit einem Anzeigemittel, das ein Zeiger sein kann, ausgebildet ist. Eine solche Vorrichtung kann beispielsweise zur vereinfachten Darstellung eines Zeitplans, beispielsweise eines Kalenders eines Managers, benutzt werden.

In einer Ausgestaltung der Erfindung weist der Grundkörper eine Sichtseite auf, die von einer Matrixanzeige gebildet ist. Die Matrixanzeige kann auf eine Sichtseite des Grundkörpers aufgebracht, beispielsweise aufgeklebt sein. Vorzugsweise ist die Matrixanzeige als LCD-, LED- oder OLED-Bildschirm ausgebildet. Vorteilhaft ist die Vorrichtung individualisierbar und für verschiedene Zeitplanungszwecke verwendbar. Dazu können einzelne Matrixanzeigebereiche in ihrer Größe veränderbare Anzeigefelder bilden, die durch Ansteuerung bestimmte Farben, Symbole oder Piktogramme anzeigen. Eine Ansteuerung kann durch eine programmierbare Steuereinheit erfolgen, die durch ein Anwendungsprogramm ("App"), welches auf einem Computer, einem Mobiltelefon oder einem Tablet-Computer ausgeführt wird, programmierbar, insbesondere fernprogrammierbar, ist.

Der Grundkörper kann als Träger für die Matrixanzeige ausgebildet sein und die optische Gestaltung der Vorrichtung, die in der Art einer Taschen-, Wand-, Stand- oder Armbanduhr ausgebildet sein kann, zumindest mitprägen.

Zweckmäßigerweise ist die Matrixanzeige scheibenförmig, insbesondere lochscheibenförmig, ausgebildet und weist vorzugsweise eine Durchtrittsöffnung aufweist, durch die das Anzeigemittel hindurchtreten kann. Vorteilhaft ist eine Kombination aus einem Zeiger, der eine Baugruppe der Vorrichtung bildet, und einer elektronischen Anzeige denkbar.

Ist die Matrixanzeige lochscheibenförmig ausgebildet, kann das Anzeigemittel, das mechanisch ausgebildet ist, durch eine Durchtrittsöffnung hindurchtreten, so dass auf einer Sichtseite der Vorrichtung das Anzeigemittel angeordnet ist und auf einer der Sichtseite abgewandten Seite eine Steuereinrichtung, die das Anzeigemittel sowie dessen Bewegungsgeschwindigkeit steuert.

Besonders vorteilhaft ist, wenn das Anzeigemittel als Zeiger in der Art eines Uhrzeigers ausgebildet ist und die Matrixanzeige in der Art eines Uhrziffernblattes kreisrund mit einer Durchtrittsöffnung im Mittelpunkt. Es wird eine Vorrichtung geschaffen, die ein mechanisches Anzeigemittel mit einer Matrixanzeige kombiniert.

In einer weiteren Ausgestaltung der Erfindung ist das bewegbare Anzeigemittel als elektronischer Zeiger ausgebildet, der auf der Matrixanzeige angezeigt wird. Vorteilhaft wird eine nahezu vollständig elektronische Vorrichtung, die vorzugsweise in der Art einer als Wand-, Stand-, Taschen- oder Armbanduhr ausgebildet ist, geschaffen.

Zweckmäßigerweise ist ein Anzeigebildschirm vorgesehen, der in Abstand zu den Anzeigefeldern angeordnet ist, vorzugsweise unterhalb. Der Anzeigebildschirm ist insbesondere als LCD-Bildschirm ausgebildet und ermöglicht die Anzeige ergänzender Informationen die Ereignisse oder zu erledigenden Tätigkeiten betreffend. Diese können als Textnachrichten, Piktorgamme, Zahlen, Buchstaben oder Farben umfassen.

Denkbar ist, dass der Anzeigebildschirm mehrere Anzeigenbereiche aufweist.

In einer Ausgestaltung der Erfindung ist die Vorrichtung in der Art einer Standuhr, Taschenuhr, Wanduhr oder Armbanduhr ausgebildet. Der Grundkörper kann ein Gehäuse bilden oder als Träger für eine elektronische Anzeige wie eine Matrixanzeige vorgesehen sein.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: eine erste Ausführungsform einer erfindungsgemäßen Vorrichtung,
- Fig. 2: eine weitere Ausführungsform einer erfindungsgemäßen Vorrichtung,
- Fig. 3: eines dritte Ausführungsform einer erfindungsgemäßen Vorrichtung,
- Fig. 4: eine weitere Ausführungsform einer erfindungsgemäßen Vorrichtung,
- Fig. 5: eine fünfte Ausführungsform einer erfindungsgemäßen Vorrichtung,
- Fig. 6: eine weitere Ausführungsform einer erfindungsgemäßen Vorrichtung,
- Fig. 7: eine besondere Ausführungsform einer erfindungsgemäßen Vorrichtung.

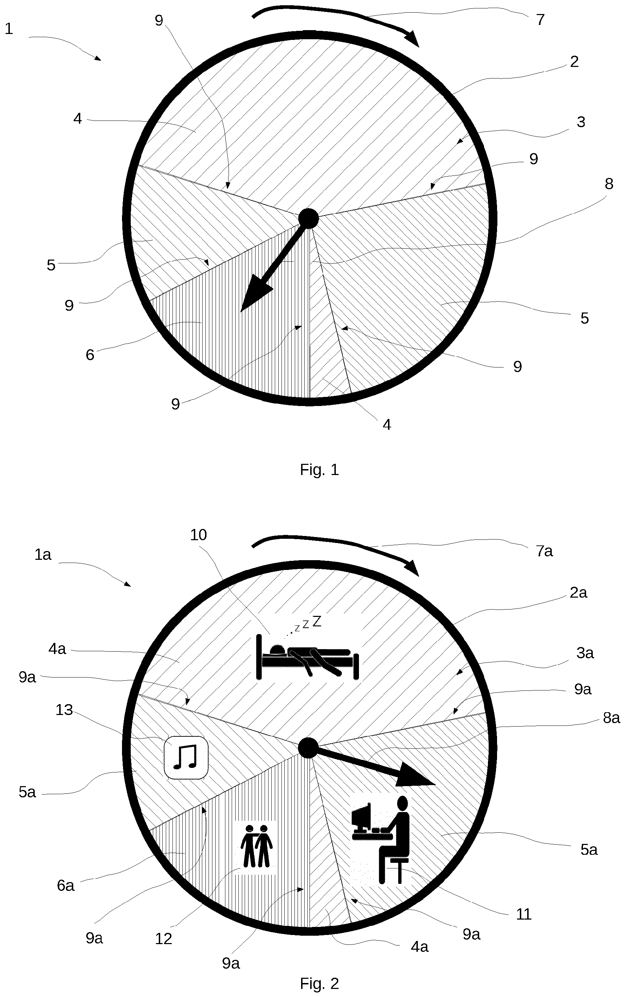

Ein in Fig. 1 in einer Draufsicht gezeigte Vorrichtung 1 ist zur Planung eines Tagesablaufs einer mit Autismus lebenden Person vorgesehen und umfasst einen runden Grundkörper 2, der auf einer Sichtseite 3 mehrere Kreissektoren bildende, benachbarte Anzeigefelder 4, 5, 6 umfasst. Jedes der Anzeigefelder 4, 5, 6 ist farbig ausgebildet, wobei benachbarte Anzeigefelder 4, 5, 6 unterschiedliche Farben, die in Fig. 1 als schraffiert dargestellt sind, aufweisen. Sämtliche Anzeigefelder 4-6 sind unterschiedlich groß, das heißt sie weisen unterschiedliche Flächeninhalte auf.

Ein Anzeigemittel, welches auf ein Ereignis und/oder eine auszuführende Tätigkeit hinweist, umfasst einen in Richtung eines Pfeils 7 drehbaren mechanischen Zeiger 8, der durch einen in Fig. 1 nicht gezeigten Antrieb drehbar ist, wobei der Antrieb derart ausgebildet ist, dass in diesem Ausführungsbeispiel eine vollständige Umdrehung des Zeigers um 360 Grad einem ganzen Tag, das heißt 24 Stunden, entspricht.

Jedes der Anzeigefelder 4-6 steht für einen Zeitraum, der mit der Bewegung des Zeigers 8 in das Anzeigefeld 4-6 beginnt und mit der Bewegung aus diesem heraus in ein benachbartes Anzeigefeld 4-6 hinein endet. Während des gesamten Zeitraums ist eine Tätigkeit, die durch die Farbe des Anzeigefeldes 4-6 definiert ist, auszuführen und/oder ein Ereignis, welches durch die Farbe des Anzeigefeldes 4-6 definiert ist, findet während des Zeitraums statt. Durch den Zeiger 8 wird einer die Vorrichtung 1 benutzenden Person angezeigt, was zu welchem Zeitpunkt zu tun ist. Ein Zurückgreifen auf eine aus dem Stand der Technik bekannte Uhr ist nicht erforderlich.

Benachbarte Anzeigefelder 4-6 sind durch eine Trennlinie 9 voneinander getrennt. Die Trennlinie 9 ist beim Übergang des Zeigers von einem Anzeigefeld 4-6 in ein benachbartes Anzeigefeld 4-6 parallel zu dessen Längsachse.

In diesem Ausführungsbeispiel zeigt der Zeiger 8 auf ein rotes Anzeigefeld 5, das für den Arbeitstag steht, während ein grünes Anzeigefeld 6 für Nachtruhe steht.

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Ein in Fig. 2 in einer Draufsicht gezeigte Vorrichtung 1a unterscheidet sich von derjenigen in Fig. 1 gezeigten dadurch, dass in einige der Anzeigefelder 4a-6a zusätzlich zur Farbgestaltung ein austauschbares Piktogramm 10-13 wiederverwendbar aufgebracht ist.

Vorteilhaft ist eine Benutzung besonders intuitiv.

Beispielsweise zeigt ein Piktogramm 10 an, dass Nachtruhe ansteht, während ein Piktogramm 11 eine Arbeitszeit, ein Piktogramm 12 einen Zeitraum für soziale Kontakte und ein Piktogramm 13 einen Zeitraum für Freizeitaktivitäten wie Musikhören anzeigt.

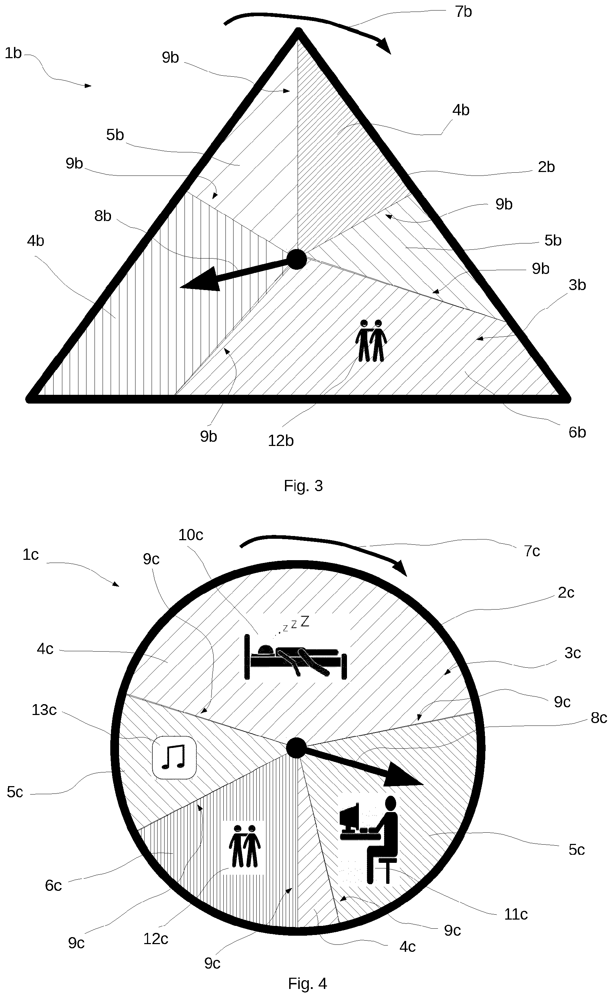

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Ein in Fig. 3 in einer Draufsicht gezeigte Vorrichtung 1b unterscheidet sich von denjenigen in Fig. 1 und 2 gezeigten dadurch, dass ein Grundkörper 2b dreieckig ausgebildet ist und Anzeigefelder 4b-6b aufweist, die drei- oder viereckig ausgebildet sind.

Denkbar ist, dass der Grundkörper 2b eine andere Form aufweist, beispielsweise quadratisch, fünfeckig, hexagonal oder achteckig.

Es wird nun auf Fig. 4 Bezug genommen, wo gleiche oder gleichwirkende Teile mit derselben Bezugszahl wie in Fig. 1 bis 3 bezeichnet sind und der betreffenden Bezugszahl jeweils der Buchstabe c beigefügt ist.

Ein in Fig. 4 in einer Draufsicht gezeigte Vorrichtung 1c unterscheidet sich von denjenigen in Fig. 1 bis 3 gezeigten dadurch, dass ein Grundkörper 2c als ein die Gestaltung der Vorrichtung 1d mitprägender Bildschirmträger für einen LCD-Bildschirm 3c ausgebildet ist, der auf eine Sichtseite aufgebracht ist. Anzeigefelder 4c-6c bilden Sichtflächenbereiche des LCD-Bildschirms 3c.

Ein auf dem Bildschirm 3c anzuzeigender Inhalt ist durch eine in Fig. 4 nicht gezeigte Steuereinheit kontrollierbar. Die Steuereinheit ist durch ein Computerprogramm, welches beispielsweise als Anwendungsprogramm ("App") auf einem Mobiltelefon oder Tablet-Computer ausgeführt wird, fernprogrammierbar. Ein Benutzer der Vorrichtung 1c kann in dem Computerprogramm eine Größe, eine Farbe sowie bei Bedarf ein Piktogramm auswählen und dadurch den auf dem LCD-Bildschirm 3c anzuzeigenden Inhalt gestalten und danach an die Steuereinheit zur Anzeige auf dem LCD-Bildschirm 3c übertragen, beispielsweise drahtlos per Bluetooth oder WLAN. Auch eine Geschwindigkeit, mit der ein mechanischer Zeiger 8c bewegbar ist, ist einstellbar.

Außerdem kann festgelegt werden, welcher Zeitraum einer vollständigen Umdrehung eines Zeigers 8c um 360 Grad entspricht.

Denkbar ist, dass durch ein einziges Computerprogramm mehrere Vorrichtungen 1c verwaltet werden können, die jeweils individualisiert werden können.

Der Grundkörper 2c ist ferner lochscheibenförmig ausgebildet und weist eine in Fig. 4 nicht näher bezeichnete Durchtrittsöffnung auf, durch die ein Verbindungsabschnitt des mechanischen Zeigers 8c, der den Zeiger 8c mit einem nicht gezeigten Antrieb verbindet, hindurchgeführt ist.

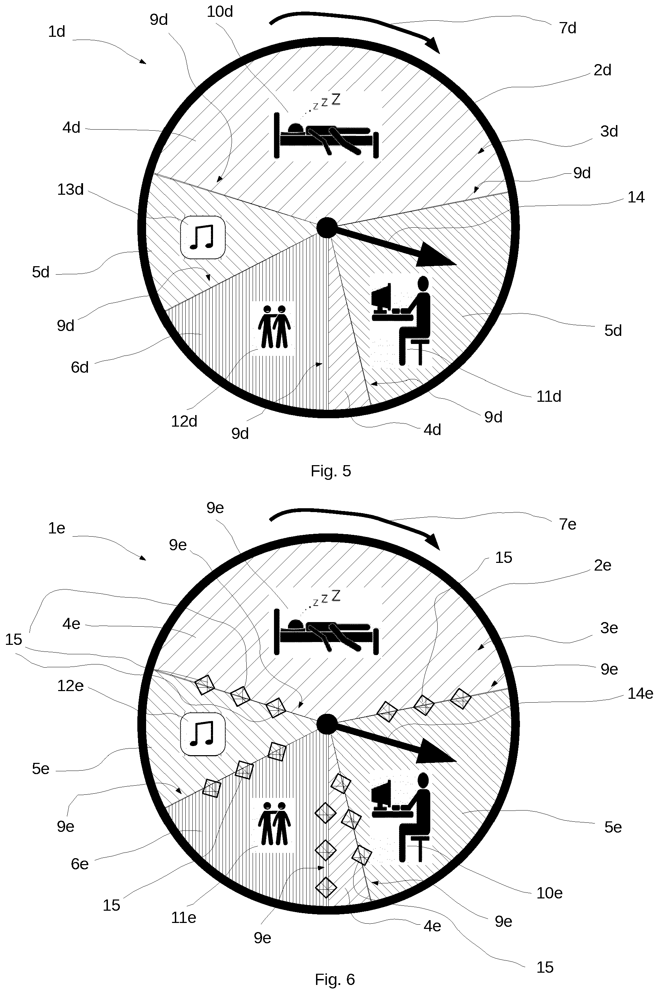

Es wird nun auf Fig. 5 Bezug genommen, wo gleiche oder gleichwirkende Teile mit derselben Bezugszahl wie in Fig. 1 bis 4 bezeichnet sind und der betreffenden Bezugszahl jeweils der Buchstabe d beigefügt ist.

Ein in Fig. 5 in einer Draufsicht gezeigte Vorrichtung 1d unterscheidet sich von denjenigen in Fig. 1 bis 3 gezeigten dadurch, dass ein Grundkörper 2d als ein die Gestaltung der Vorrichtung 1d mitprägender Bildschirmträger für einen LCD-Bildschirm 3d ausgebildet ist, der auf eine Sichtseite aufgebracht istund von Fig. 4 dadurch, dass ein elektronischer Zeiger 14 vorgesehen ist, der durch Ansteuerung des LCD-Bildschirms 3a erzeugt wird. Vorteilhaft sind keine mechanischen Bauteile erforderlich, eine Anpassung der Vorrichtung 1d an Bedürfnisse eines Benutzers ist durch Benutzung eines Computerprogramms oder einer auf einem Mobiltelefon ausgeführten App möglich.

Es wird nun auf Fig. 6 Bezug genommen, wo gleiche oder gleichwirkende Teile mit derselben Bezugszahl wie in Fig. 1 bis 5 bezeichnet sind und der betreffenden Bezugszahl jeweils der Buchstabe e beigefügt ist.

Ein in Fig. 6 in einer Draufsicht gezeigte Vorrichtung 1e unterscheidet sich von denjenigen in Fig. 1 bis 5 gezeigten dadurch, dass bei einem Übergang von einem Anzeigefeld 4e-6e zu einem benachbarten Anzeigefeld 4e-6e drei Lämpchen 15 als optisches Signalmittel vorgesehen sind, die sich entlang einer Trennlinie 9e angeordnet sind und die beim Übergang eines Zeigers 14e von einem Anzeigefeld 4e-6e zu dem benachbarten Anzeigefeld 4e-6e dreimal aufleuchten. Dadurch wird einem Benutzer der Vorrichtung 1e signalisiert, dass ein neues Ereignis und/oder eine neue auszuführende Tätigkeit ansteht.

Es versteht sich, dass andere Signalmittel denkbar sind, beispielsweise ein Vibrieren der Vorrichtung oder des Grundkörpers 2e oder ein akustisches Signal.

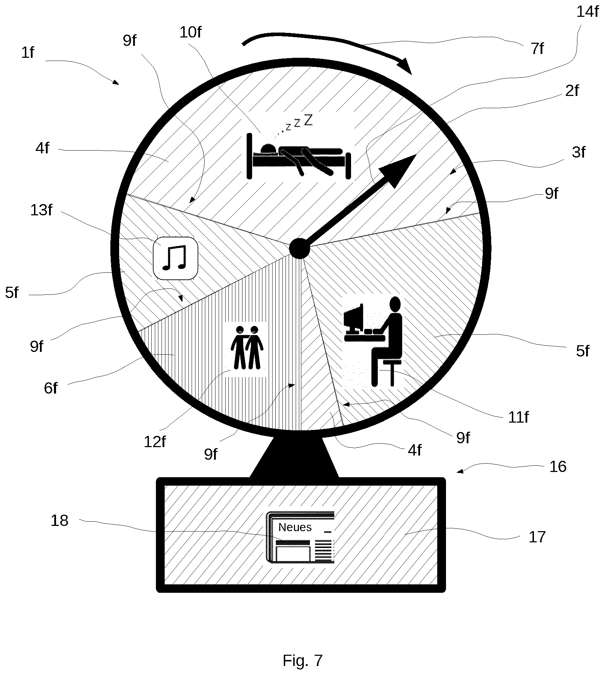

Es wird nun auf Fig. 7 Bezug genommen, wo gleiche oder gleichwirkende Teile mit derselben Bezugszahl wie in Fig. 1 bis 6 bezeichnet sind und der betreffenden Bezugszahl jeweils der Buchstabe f beigefügt ist.

Eine in Fig. 7 in einer Draufsicht gezeigte Vorrichtung 1f unterscheidet sich von denjenigen in Fig. 1 bis 6 gezeigten dadurch, dass ein Grundkörper einen unteren Abschnitt 16 aufweist, an dem ein separater Anzeigebildschirm 17 angebracht ist, der zur Anzeige besonderer, ergänzender Nachrichten 18 betreffend die Ereignisse oder auszuführenden Tätigkeiten vorgesehen ist. Diese Nachrichten können beispielsweise Textnachrichten sein.

Denkbar ist, dass die Vorrichtung 1-1f in der Art einer Standuhr, Taschenuhr, Wanduhr oder Armbanduhr ausgebildet ist.

Es versteht sich, dass sämtliche Kombinationen der in Fig. 1 bis 7 gezeigten Merkmale denkbar sind. Beispielsweise kann eine in Fig. 3 gezeigte Vorrichtung 1b einen LCD-Bildschirm 3c gemäß Fig. 4 aufweisen, der auf einen als Bildschirmträger ausgebildeten Grundkörper 2c aufgebracht ist.

## Patentansprüche

1. Vorrichtung (1-1f) zur Anzeige eines zeitlichen Ablaufs von zumindest zwei aufeinanderfolgenden Ereignissen und/oder auszuführenden Tätigkeiten, die einen Grundkörper (2-2f) mit mindestens zwei Anzeigefeldern (4, 5, 6 - 4f, 5f, 6f) sowie ein bewegbares Anzeigemittel (8-8c; 14; 14e; 14f) aufweist, wobei das bewegbare Anzeigemittel (8-8c; 14; 14e; 14f) dazu eingerichtet ist, auf eines der Anzeigefelder zu zeigen, um auf das Ereignis und/oder die auszuführende Tätigkeit hinzuweisen, **dadurch gekennzeichnet,**
**dass** eine Bewegungsgeschwindigkeit des Anzeigemittels (8-8c; 14; 14e; 14f) einstellbar ist, wobei die Bewegungsgeschwindigkeit des Anzeigemittels von Anzeigefeld zu Anzeigefeld veränderbar ist.

2. Vorrichtung nach Anspruch 1,
**dadurch gekennzeichnet**,
die Anzeigefelder (4, 5, 6 - 4f, 5f, 6f) in ihrer Größe veränderbar sind.

3. Vorrichtung nach Anspruch 1 oder 2,
**dadurch gekennzeichnet,**
**dass** das Anzeigemittel stabförmig, vorzugsweise als Zeiger (8-8f), ausgebildet ist.

4. Vorrichtung nach einem der Ansprüche 1 bis 3,
**dadurch gekennzeichnet,**
**dass** ein Signalmittel (15) vorgesehen ist, das einen Übergang des Anzeigemittels (8-8c; 14; 14e; 14f) von einem Anzeigefeld zu einem benachbarten Anzeigefeld signalisiert.

5. Vorrichtung nach einem der Ansprüche 1 bis 4,
**dadurch gekennzeichnet,**
**dass** bei einem Übergang des Anzeigemittels (8-8c; 14; 14e; 14f) von einem Anzeigefeld zu einem benachbarten Anzeigefeld eine Trennlinie (9-9f), die benachbarte Anzeigefelder (4, 5, 6 - 4f, 5f, 6f) voneinander abgrenzt, parallel zu dem bewegbaren Anzeigemittel (8-8c; 14; 14e; 14f) ist.

6. Vorrichtung nach einem der Ansprüche 1 bis 5,
**dadurch gekennzeichnet,**
**dass** der Grundkörper (2-2f) eine Sichtseite (3-3f) mit Sichtseitenbereichen aufweist, die von den mindestens zwei Anzeigefeldern (4, 5, 6 - 4f, 5f, 6f) gebildet sind.

7. Vorrichtung nach einem der Ansprüche 1 bis 6,
**dadurch gekennzeichnet,**
**dass** der Grundkörper (2-2f) eine Sichtseite (3-3f) aufweist, die von einer Matrixanzeige (3-3f) gebildet ist.

8. Vorrichtung nach Anspruch 7,
**dadurch gekennzeichnet,**
**dass** die Matrixanzeige (3-3c) scheibenförmig, insbesondere lochscheibenförmig, ausgebildet ist und vorzugsweise eine Durchtrittsöffnung aufweist, durch die das Anzeigemittel (8-8c) hindurchtreten kann.

9. Vorrichtung nach Anspruch 7 oder 8,
**dadurch gekennzeichnet,**
**dass** das bewegbare Anzeigemittel (14; 14e; 14f) als elektronischer Zeiger ausgebildet ist, der auf der Matrixanzeige (3-3f) angezeigt wird.

10. Vorrichtung nach einem der Ansprüche 1 bis 9,
**dadurch gekennzeichnet,**
**dass** ein Anzeigebildschirm (17) vorgesehen ist, der in Abstand zu den Anzeigefeldern (4, 5, 6 - 4f, 5f, 6f) angeordnet ist, vorzugsweise unterhalb.

11. Vorrichtung nach einem der Ansprüche 1 bis 10,
**dadurch gekennzeichnet,**
**dass** die Vorrichtung (1-1f) in der Art einer Standuhr, Taschenuhr, Wanduhr oder Armbanduhr ausgebildet ist.

12. Verfahren zur Anzeige eines zeitlichen Ablaufs von zumindest zwei aufeinanderfolgenden Ereignissen und/oder auszuführenden Tätigkeiten, bei dem ein bewegbares Anzeigemittel (8-8c; 14; 14e; 14f) auf eines von zumindest zwei Anzeigefeldern (4, 5, 6 - 4f, 5f, 6f) zeigt, wobei ein jedes Anzeigefeld einem bestimmten Zeitraum zugeordnet wird, in dem das Ereignis stattfindet und/oder innerhalb dessen eine auszuführende Tätigkeit zu erledigen ist,
**dadurch gekennzeichnet**,
dasseine Bewegungsgeschwindigkeit des Anzeigemittels (8-8c; 14; 14e; 14f) eingestellt wird, wobei die Bewegungsgeschwindigkeit des Anzeigemittels von Anzeigefeld zu Anzeigefeld verändert wird.

13. Verfahren nach Anspruch 12,
**dadurch gekennzeichnet,**
**dass** bei einem Übergang des Anzeigemittels (8-8c; 14; 14e; 14f) von einem Anzeigefeld (4, 5, 6 - 4f, 5f, 6f) zu einem benachbarten Anzeigefeld (4, 5, 6 - 4f, 5f, 6f) ein optisches, akustisches und/oder haptisches Signal (15) ausgegeben wird, das einem Benutzer ein neues Ereignis oder eine andere auszuführende Tätigkeit signalisiert.

14. Verfahren nach Anspruch 12 oder 13,
**dadurch gekennzeichnet,**
**dass** das Ereignis und/oder die auszuführende Tätigkeit visuell, insbesondere als Symbol oder Piktogramm (10-13; 10e-13f), in wenigstens einem der Anzeigefelder (4, 5, 6 - 4fe, 5f, 6f) angezeigt wird.

## Claims

1. Device (1-1f) for indicating a time sequence of at least two successive events and/or activities to be carried out, comprising a basic body (2-2f) with at least two display fields (4, 5, 6 - 4f, 5f, 6f) and a movable display appliance (8-8c; 14; 14e; 14f), wherein the movable display appliance (8-8c; 14; 14e; 14f) is arranged to point to one of the display fields in order to indicate the event and/or the activity to be carried out, **characterised in that** the movement speed of the display appliance (8-8c; 14; 14e; 14f) is adjustable, with the movement speed of the display appliance being variable from display field to display field.

2. Device according to claim 1, **characterised in that** the display fields (4, 5, 6 - 4f, 5f, 6f) are variable in size.

3. Device according to claim 1 or 2, **characterised in that** the display appliance is rod-shaped, preferably in the form of a pointer (8-8f).

4. Device according to one of claims 1 to 3, **characterised in that** a signalling means (15) is provided which signals a transition of the display appliance (8-8c; 14; 14e; 14f) from one display field to an adjacent display field.

5. Device according to one of claims 1 to 4, **characterised in that**, during a transition of the display appliance (8-8c; 14; 14e; 14f) from one display field to an adjacent display field, a dividing line (9-9f), which delimits adjacent display fields (4, 5, 6 - 4f, 5f, 6f) from one another, is parallel to the movable display appliance (8-8c; 14; 14e; 14f).

6. Device according to one of claims 1 to 5, **characterised in that** the base body (2-2f) has a visible side (3-3f) with regions which are formed by the at least two display fields (4, 5, 6 - 4f, 5f, 6f).

7. Device according to one of claims 1 to 6, **characterised in that** the base body (2-2f) has a visible side (3-3f) which is formed by a matrix display (3-3f).

8. Device according to claim 7, **characterised in that** the matrix display (3-3c) is disc-shaped, in particular perforated disc-shaped, and preferably has an aperture through which the display appliance (8-8c) can pass.

9. Device according to claim 7 or 8, **characterised in that** the movable display appliance (14; 14e; 14f) is designed as an electronic pointer which is displayed on the matrix display (3-3f).

10. Device according to one of claims 1 to 9, **characterised in that** a display screen (17) is provided, which is arranged at a distance from the display fields (4, 5, 6 - 4f, 5f, 6f), preferably below.

11. Device according to one of claims 1 to 10, **characterised in that** the device (1-1f) is designed in the manner of a floor clock, pocket watch, wall clock or wristwatch.

12. Method for displaying a time sequence of at least two successive events and/or activities to be carried out, in which a movable display appliance (8-8c; 14; 14e; 14f) points to one of at least two display fields (4, 5, 6 - 4f, 5f, 6f) in order to indicate the respective event and/or the activity to be carried out, **characterised in that** a speed of movement of the display appliance (8-8c; 14; 14e; 14f) is adjustable, and the speed of movement being variable from display field to display field.

13. Method according to claim 12, **characterised in that** during a transition of the display appliance (8-8c; 14; 14e; 14f) from one display field (4, 5, 6 - 4f, 5f, 6f) to an adjacent display field (4, 5, 6 - 4f, 5f, 6f), an optical, acoustic and/or haptic signal (15) is emitted, which signals to a user a new event beginning or that another activity is to be carried out.

14. Method according to claim 12 or 13, **characterised in that** the event and/or the activity to be performed is displayed visually, in particular as a symbol or pictogram (10-13; 10e-13f), in at least one of the display fields (4, 5, 6 - 4fe, 5f, 6f).

## Revendications

1. Dispositif (1-1f) pour l'affichage d'un déroulement temporel d'au moins deux événements successifs et/ou d'activités à exécuter, qui présente un corps de base (2-2f) avec au moins deux champs d'affichage (4, 5, 6 - 4f, 5f, 6f) ainsi qu'un moyen d'affichage mobile (8-8c ; 14 ; 14e ; 14f), le moyen d'affichage mobile (8-8c ; 14 ; 14e ; 14f) est agencé pour pointer sur l'un des champs d'affichage afin d'indiquer l'événement et/ou l'action à exécuter, **caractérisé en ce qu'**une vitesse de déplacement du moyen d'affichage (8-8c ; 14 ; 14e ; 14f) est réglable, la vitesse de déplacement du moyen d'affichage étant variable d'un champ d'affichage à l'autre.

2. Dispositif selon la revendication 1, **caractérisé en ce que** les champs d'affichage (4, 5, 6 - 4f, 5f, 6f) sont de taille variable.

3. Dispositif selon la revendication 1 ou 2, **caractérisé en ce que** le moyen d'affichage est en forme de bâton, de préférence en forme d'aiguille (8-8f).

4. Dispositif selon l'une des revendications 1 à 3, **caractérisé en ce qu'**il est prévu un moyen de signalisation (15) qui signale un passage du moyen d'affichage (8-8c; 14 ; 14e ; 14f) d'un champ d'affichage à un champ d'affichage voisin.

5. Dispositif selon l'une des revendications 1 à 4, **caractérisé en ce que**, lors d'une transition du moyen d'affichage (8-8c ; 14 ; 14e ; 14f) d'un champ d'affichage à un champ d'affichage voisin, la ligne de séparation (9-9f) délimitant des champs d'affichage voisins (4, 5, 6 - 4f, 5f, 6f) est parallèle au moyen d'affichage mobile (8-8c ; 14 ; 14e ; 14f).

6. Dispositif selon l'une des revendications 1 à 5, **caractérisé en ce que** le corps de base (2-2f) présente une face de visualisation (3-3f) avec des zones de face de visualisation formées par les au moins deux zones d'affichage (4, 5, 6 - 4f, 5f, 6f).

7. Dispositif selon l'une des revendications 1 à 6, **caractérisé en ce que** le corps de base (2-2f) présente une face de visualisation (3-3f) formée par un affichage matriciel (3-3f).

8. Dispositif selon la revendication 7, **caractérisé en ce que** l'affichage matriciel (3-3c) est en forme de disque, notamment en forme de disque perforé, et présente de préférence une ouverture de passage à travers laquelle le moyen d'affichage (8-8c) peut passer.

9. Dispositif selon la revendication 7 ou 8, **caractérisé en ce que** le moyen d'affichage mobile (14 ; 14e ; 14f) est réalisé sous la forme d'un pointeur électronique qui est affiché sur l'afficheur matriciel (3-3f).

10. Dispositif selon l'une des revendications 1 à 9, **caractérisé en ce qu'**il est prévu un écran d'affichage (17) disposé à distance des zones d'affichage (4, 5, 6 - 4f, 5f, 6f), de préférence en dessous.

11. Dispositif selon l'une des revendications 1 à 10, **caractérisé en ce que** le dispositif (1-1f) est du type pendule, montre à gousset, pendule murale ou montre-bracelet.

12. Procédé d'affichage d'un déroulement temporel d'au moins deux événements successifs et/ou d'activités à exécuter, dans lequel un moyen d'affichage mobile (8-8c; 14; 14e; 14f) pointe sur l'un d'au moins deux champs d'affichage (4, 5, 6 - 4f, 5f, 6f) pour indiquer l'événement respectif et/ou l'activité à exécuter, **caractérisé en ce qu'**une vitesse de déplacement du moyen d'affichage (8-8c ; 14; 14e ; 14f) est réglable, la vitesse de déplacement pouvant être modifiée d'un champ d'affichage à l'autre.

13. Procédé selon la revendication 12, **caractérisé en ce que**, lors d'un passage du moyen d'affichage (8-8c ; 14; 14e ; 14f) d'un champ d'affichage (4, 5, 6 - 4f, 5f, 6f) à un champ d'affichage voisin (4, 5, 6 - 4f, 5f, 6f), un signal optique, acoustique et/ou haptique (15) est émis, qui signale à un utilisateur un nouvel événement ou une autre action à exécuter.

14. Procédé selon la revendication 12 ou 13, **caractérisé en ce que** l'événement et/ou l'activité à exécuter est indiqué visuellement, notamment sous la forme d'un symbole ou d'un pictogramme (10-13; 10e-13f), dans au moins un des champs d'affichage (4, 5, 6 - 4fe, 5f, 6f).
